# EUROPEAN PATENT APPLICATION

(11) **EP 1 640 921 A2**
(43) Date of publication of application: **29.03.2006**
(21) Application number: 05255895.4
(22) Date of filing: 22.09.2005
(51) Int. Cl.: G06T 15/70

(54) **Image processing device and method for real time rendering of moving images**

(30) Priority: 22.09.2004 JP 2004275909
(71) Applicant: Kabushiki Kaisha Sega doing business as Sega Corporation, Tokyo 144-8531 (JP)
(72) Inventor: Kamai, Junichi, KABUSHIKI KAISHA SEGA, Ohta-ku, Tokyo 144-8531 (JP); Miyashita, Masaki, KABUSHIKI KAISHA SEGA, Ohta-ku, Tokyo 144-8531 (JP)
(74) Representative: Brown, Kenneth Richard

(57) **Abstract**

The workability for performing moving image processing and generating moving images in real time is alleviated and a desired quality of such moving image is realized without using the LOD technique. When an object image being displayed on a display monitor is enlarged or reduced, parts images are added or deleted according to the order of significance value of the respective parts images set in advance based on the distance from the viewpoint thereof. Specifically, when an object image is to be enlarged, parts images with a low significance value and which are non-display targets in the current display status will be added. Meanwhile, when an object image is to be reduced, among the parts images currently being displayed, those with the lowest significance value are deleted, in order, to become non-display targets according to the distance from the viewpoint.

## Description

### BACKGROUND

### Field of the Invention

The present invention relates to an image processing device and an image processing method for generating moving image patterns by processing an object image formed from a plurality of parts images in real time.

### Description of the Related Art

Conventionally, in order to process and generate a moving image as a 3D image on a display monitor (e.g., CRT, LCD, etc.) In real time, it was necessary that the time required for such processing and generation is implemented within a defined time frame. This time required for the processing and generation differs based on the configuration of the object to be displayed, and the time required will become longer as the image becomes more complex (high resolution image). In other words, the higher the resolution of an image, the greater the information content, and the time required for operation processing and the like will become longer by that much.

In order to realize the processing and generation within the scope of time required, there is a method of preparing a plurality of types of candidate objects having different information content regarding a single object, and selecting a candidate object, for instance, according to the distance from the viewpoint In such an object (LOD "Level of Detail" technique).

As related art employing this LOD technique, as shown in Japanese Patent Laid-Open Publication No. 2003-115056 (Patent Document 1), provided is an image generation method and an Image generation device employing such a method capable of obtaining a beautiful filtering effect with less blurs even for a polygon in which is an object is inclined in a z axis direction and elongated in an inclination direction.

In this Patent Document 1, texture coordinates and an LOD (Level of Detail) value are computed in pixel units from object data, a filtering area of a pixel read from a texture memory is decided on the basis of the texture coordinates and the LOD value, a weighted mean value corresponding to the size of the decided filtering area is obtained, and a texture color to be attached to the polygon Is generated thereby.

### SUMMARY

Nevertheless, with the LOD technique described in Patent Document 1, the operation processing (automatic operation) to be conducted based on the LOD value is often not able to obtain sufficient quality. Thus, as a result of having to manually set the correction value and so on in advance, the preparation and development period for performing the moving image processing and generating moving Images In real time will become redundant and the operation thereof will become complex

The present invention was devised in view of the foregoing problems, and an object thereof is to obtain an image processing method capable of alleviating the workability for performing moving image processing and generating moving images in real time and realizing a desired quality of such moving image without using the LOD technique.

The first invention is an image processing device having a display unit capable of displaying an object Image formed from a plurality of parts images; and an image processing operation unit for controlling the image by processing the object image in real time; wherein the operation processing unit has significance value storage means for storing the significance value numerically showing the level of relative importance and priority set In advance to the respective parts images configuring the object image; operation means for operating the definition of the respective parts images to be displayed as a moving image on the display unit; and parts image display target discrimination means for discriminating whether to make the parts image a display target based on the definition operated with the operation means, and the significance value; wherein each of the means is stored in a memory as an image processing program and the image processing program is executed with the Image processing operation unit.

According to the first invention, a relative significance value is set to each of the parts images configuring the object image. A significance value numerically shows the level of importance and priority based on the distance from the viewpoint of the object image.

Here, if the significance value is high (numerically a large value), this parts image has high importance and priority, and is retained when the definition upon displaying the parts image is high (i.e., the display is maintained).

Meanwhile, if the significance value is low, since this parts image has low importance and priority, this is deleted when the definition upon displaying the parts image is low (i.e., excluded from the display target).

As described above, since each parts image is prepared singularly and only the judgment of whether to maintain or exclude the display target based on a significance value is required, incidental processing (e.g., correction processing after the processing employing the LOD technique) will no longer be required, and the working efficiency can be improved thereby

Further, the delay in the processing time caused by not employing the LOD technique can be overcome by securing the prior and existing total time since the absolute amount of the processing target will decrease as a result of the parts images, which are subject to processing, being excluded from the display target, and the time required for the real time processing and generation of moving images can be maintained to be within a defined time frame.

Further, since it is not necessary to prepare a plurality of types of parts images having different information content for a single parts image, the reduction of memory capacity and improvement in processing speed can be expected.

The second invention is an image processing device comprising a display unit capable of displaying an object image formed from a plurality of parts images; and an image processing operation unit for controlling a moving image by processing the object image in real time; wherein the operation processing unit has significance value storage means for storing the significance value numerically showing the level of relative importance and priority set in advance to the respective parts images configuring the object image; operation means for operating the distance of the respective parts images to be displayed as a moving image on the display unit from a viewpoint; and parts image display control means for excluding, in order, the parts image with a low significance value from the display target to be displayed on the display unit in accordance with the distance operated with the operation means becoming longer, and making, in order, the parts Image with a low significance value to be the display target to be displayed on the display unit in accordance with the distance operated with the operation means becoming shorter; wherein each of the means is stored in a memory as an image processing program and the image processing program is executed with the image processing operation unit.

Further, the third invention is an image processing method to be executed with an image processing device comprising a display unit capable of displaying an object image formed from a plurality of parts images; and an Image processing operation unit for controlling a moving image by processing the object image in real time; wherein, based on an image processing program stored in a memory in advance, the Image processing operation unit executes the steps of: generating each of the parts images with one type of information content including the number of apexes and the texture size; setting, to the respective parts images, the significance value numerically showing the level of relative importance and priority in the distance from a viewpoint which changes based on a moving Image pattern; and excluding the parts image with a low significance value from the display target in accordance with the increase in the distance from the viewpoint to the respective parts images.

According to the present invention, a relative significance value is set to each of the parts images configuring the object image. A significance value numerically shows the level of importance and priority based on the distance from the viewpoint of the object image.

Here, if the significance value is high (numerically a large value), this parts image has high importance and priority, and is retained when the definition upon displaying the parts image is high (i.e., the display is maintained). Meanwhile, if the significance value is low, since this parts Image has low importance and priority, this is deleted when the definition upon displaying the parts image is low (i.e., excluded from the display target).

As described above, since each parts image is prepared singularly and only the judgment of whether to maintain or exclude the display target based on a significance value is required, incidental processing (e.g., correction processing after the processing employing the LOD technique) will no longer be required, and the working efficiency can be improved thereby.

Further, the delay in the processing time caused by not employing the LOD technique can be overcome by securing the prior and existing total time since the absolute amount of the processing target will decrease as a result of the parts Images, which are subject to processing, being excluded from the display target, and the time required for the real time processing and generation of moving images can be maintained to be within a defined time frame.

Further, since it is not necessary to prepare a plurality of types of parts images having different information content for a single parts image, the reduction of memory capacity and improvement in processing speed can be expected.

Further, in the third invention, the significance value is set in consideration of the relative display area occupied by the parts image.

Although the significance value was set based on the distance from the viewpoint, if the display area occupied by the parts image is great even if the distance is long, or, contrarlly, when the display area occupied by the parts image is small even if the distance is different (short), the order of excluding the parts images from the display target will cause problems if it is only based on the distance.

Thus, upon seeking the significance value, an appropriate significance value can be set by considering the display area occupied by the parts image in addition to the distance from the viewpoint.

The present invention is also a program for causing a computer to function as an image generation means for generating an image of an object disposed in a virtual space viewed from a prescribed viewpoint position, wherein the object is configured from a plurality of parts, display priority is set to the respective parts according to the distance from the viewpoint of the object, and the image generation means has means for operating the distance from the viewpoint of the object, and means for generating and object image by selecting the parts of an object to be displayed based on the operated distance and the display priority, Incidentally, for instance, definition is calculated based on the distance between the object and the viewpoint, and, the closer the distance, the definition will be judged as being high. A high definition object will be configured from more parts.

The present invention yields a superior effect in that the workability for performing moving image processing and generating moving images in real time can be alleviated and a desired quality of such moving image can be realized without using the LOD technique.

### DESCRIPTION OF THE DRAWINGS

FIG. 1 is a block diagram of the game apparatus to which the present invention is employed;
FIG. 2 Is a front view showing the display status (enlargement ratio) of an object image in a display monitor according to the present embodiment:
FIG. 3 is a front view showing the display status (intermediate ratio) of an object image in a display monitor according to the present embodiment;
FIG. 4 is a front view showing the display status (reduction ratio) of an object image in a display monitor according to the present embodiment;
FIG. 5 is a functional block diagram mainly for the display target discrimination control of the respective parts images configuring an object image based on the zoom in/zoom out in the CPU pertaining to the present embodiment; and
FIG 6 is a flowchart showing the viewpoint movement display control routine according to the present embodiment.

### DETAILED DESCRIPTION

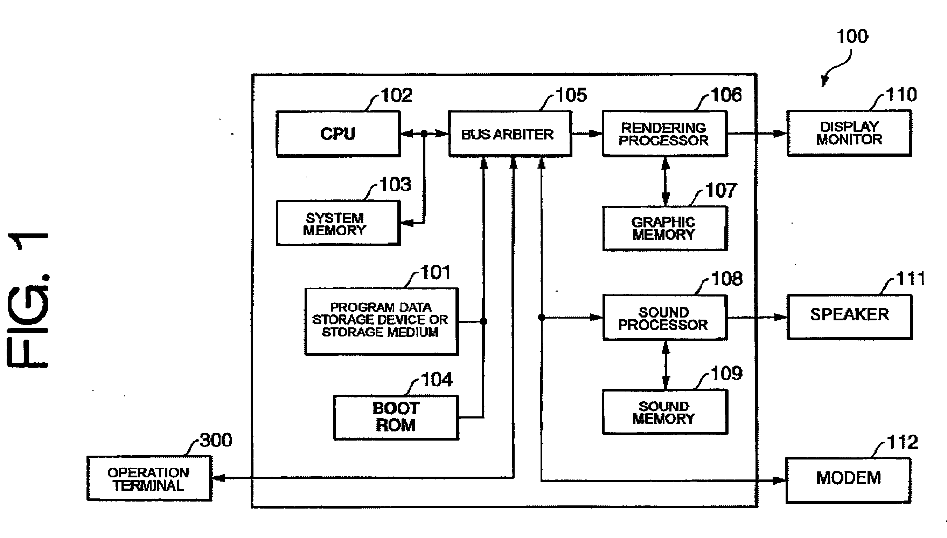

FIG. 1 shows a block diagram of a game apparatus as an example of the image processing device according to the present invention.

A game apparatus 100 has a program data storage device or storage medium (including optical disks and optical disk drives) 101 storing a game program and data (including visual and music data), a CPU 102 for executing the game program, controlling the overall system and performing coordinate calculation and so on for displaying images, a system memory 103 for storing programs and data required for the CPU 102 to perform processing, a BOOTROM 104 storing programs and data required for activating the game apparatus 100, and a bus arbiter 105 for controlling the flow of programs and data with the apparatuses to be connected to the respective blocks of the game apparatus 100 or to be connected externally, and these components are respectively connected via a bus. Further, an operation terminal 300 as an operation means for a game player to play the game is connected to the bus arbiter 105.

A rendering processor 106 is connected to the bus, and the visual (movie) data read from the program data storage device or storage medium 101 or images to be generated according to the operator's operations or the game progress are displayed on a display monitor 110 with the rendering processor 106.

The graphic data and the like required for the rendering processor 106 to generate images are stored in a graphic memory (frame buffer) 107,

A sound processor 108 is connected to the bus, and music data read from the program data storage device or storage medium 101 as well as sound effects and sounds to be generated according to the operator's operations or the game progress are output from a speaker 111 with the sound processor 108.

The sound data and the like required for the sound processor 108 to generate sound effects and sounds are stored in a sound memory 109.

A modem 112 is connected to the game apparatus 100, and communication with other game apparatuses 100 or a network server is enabled via a telephone line (not shown).

Further, connected to the game apparatus 100 are a backup memory 113 (including disk storage mediums and storage devices) for storing information of the intermediate stages of the game and the program data Input via the modem 112, and a controller 114 for inputting to the game apparatus 100 information for controlling the game apparatus 100 according to the operator's operations and the externally connected apparatuses. The CPU 102 and rendering processor 106 configure the image operation processing unit.

In the present embodiment, a design simulation program is stored as the program data, and the game apparatus 100 activates the rendering processor 106 and sound processor 108 and so on in order to implement this design simulation.

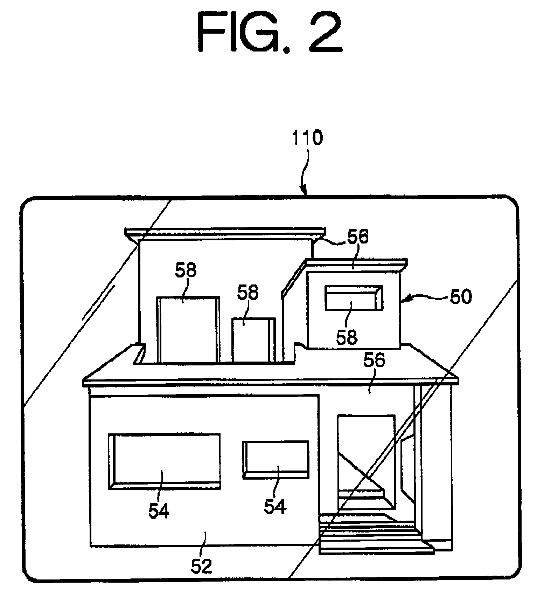

Displayed on the display monitor 110 is an object image (an architectural house in this case) 50 as illustrated in FIG. 2 based on the design simulation program. This object image 50 is a 3D display with perspective of a so-called bird's eye view format, and, for instance, as depicted in FIG 2 to FIG. 4, in this display, the distance from the viewpoint (a pseudo filming position) is changed, and a depth feel is yielded on the flat screen.

FIG. 2 shows the object image 50 In a most enlarged state (viewpoint is near), and, as shown below, is configured as an aggregate of a plurality of parts images. Incidentally, the parts images shown here are representative examples.

A first parts image 52 is the overall structural image of the house, and represents a two-story house in the present embodiment.

A second parts image 54 is a first floor window image, and is provided to the front wall closest to the viewpoint.

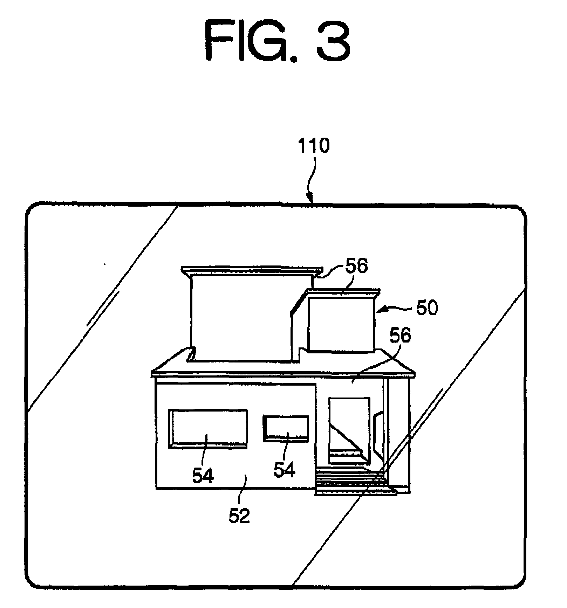

A third parts image 56 is a shadow image, and is representing, in a shadow image, the state where light is being emitted from the front right toward the back left of FIG. 3.

A fourth parts image 58 is a second floor window image, and is provided to a front wall on the second floor existing in a position that is farther back than the front wall on the first floor.

In the present embodiment, a "significance value" is respectively set to the three types of representative parts images 54, 56, 58 other than the first parts image 52.

This "significance value" is for showing the order regarding whether to make the object image 50 a display target or to exclude it from the display target when such object image 50 is zoomed in (approaches) or zoomed out (alienates) to or from the viewpoint (camera filming position when deeming that FIG. 2 to FIG. 4 are being filmed with a camera), and is set based on the distance (primary) from the viewpoint of the zoomed parts image, and the display area (secondary) occupied by the parts image.

In other words, even if parts images (second parts image 54 and third parts image 56 in this case) near the viewpoint are zoomed out, since they are in a visible position, the significance value is set high. Meanwhile, when a parts image (fourth parts image 58 in this case) far from the viewpoint is zoomed out, since it will be in an invisible position, the significance value is set low.

Incidentally, since the first parts image 52 is constantly a display target, It Is excluded from the setting of the significance value (or, always given the highest significance value).

When representing the relationship of the foregoing significance value in a formula, second parts image 54 = third parts image 56 > fourth parts image 58 (or second parts image 54 > third parts Image 56).

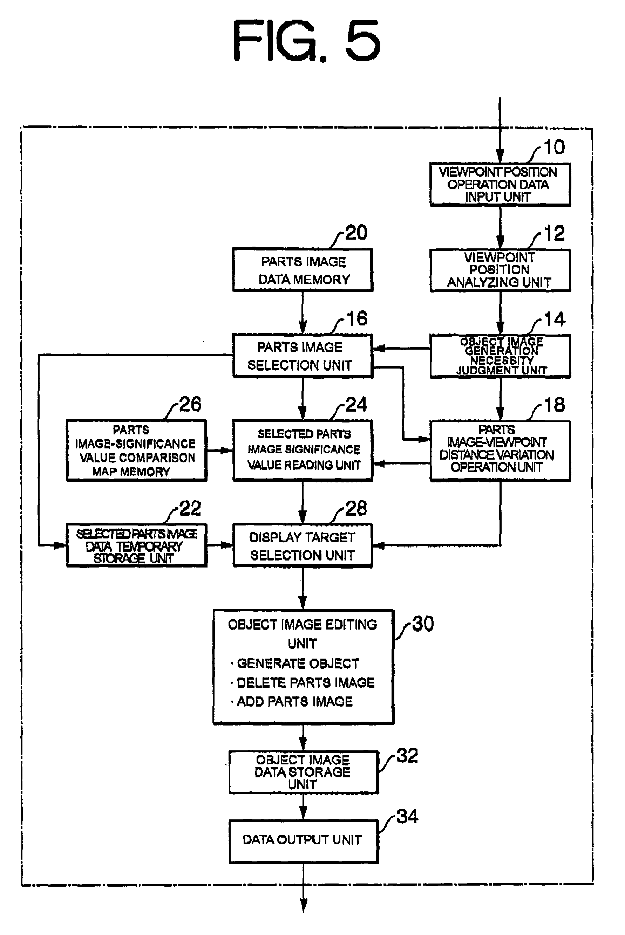

In the present embodiment, in addition to pre-storing the significance value of each parts image, a threshold value of the distance from the viewpoint of the respective parts images is stored, and, when the distance from the viewpoint of the respective parts images is changed between FIG. 3 and FIG 5, the distance and threshold value thereof are compared, and the parts image is excluded from the display target in order from the lowest significance value.

Thereby, although all parts images are display targets in FIG. 2, when zooming out to the state of FIG. 3, foremost, the fourth parts image 58 (second floor window) is excluded from the display target.

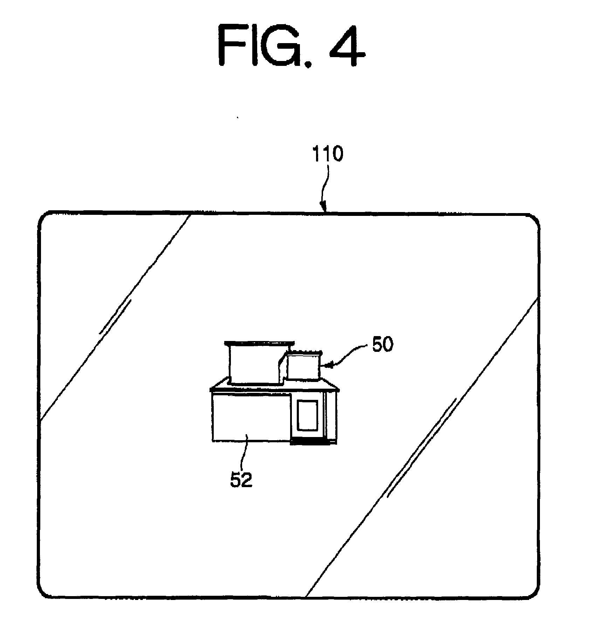

Thereafter, when further zooming out to the state of FIG. 4, the second parts image 54 (first floor window) and third parts image (shadow image) are excluded from the display target.

Contrarily, when zooming in from FIG. 4 → FIG 3 → FIG. 2, opposite to the above, the display target is restored in order from the highest significance value.

FIG. 5 is a functional block diagram mainly for the display target discrimination control of the respective parts images 52, 54, 56, 58 configuring the object image 50 by the zoom in/zoom out in the CPU 102 which functions as the operation processing unit.

When there is an operation for changing the viewpoint position, the operation signal thereof is input to the viewpoint position operation data input unit 10,

A viewpoint position analyzing unit 12 is connected to the viewpoint position operation data input unit, and analyzes and recognizes the viewpoint position based on the operation signal input to the viewpoint position operation data input unit.

The viewpoint position analyzing unit 12 is connected to an object image generation necessity judgment unit 14, and this object image generation necessity judgment unit 14 judges whether to generate the object Image 50 based on the viewpoint position.

In other words, if there is any change to the initial status or viewpoint orientation, it is necessary to newly generate the object image 50, and if this is a change in distance of the viewpoint (enlargement/reduction) to the object image 50 being displayed, it is judged that the change, addition, deletion or the like (hereinafter referred to as editing) of the parts image is required.

Further, depending on the moving direction of the viewpoint, there may be cases where the enlargement (zoom in)/reduction (zoom out) of the size will suffice without having to edit the parts image of the object image 50 currently being displayed.

A parts image selection unit 16 and a parts Image-viewpoint distance variation operation unit 18 are connected to the image generation necessity judgment unit 14.

When the generation or editing of the object image 50 is required, the parts image selection unit 16 reads necessary parts image data from the parts image data memory 20, and deletes the unnecessary parts image in order to select the parts image of the display target. Incidentally, this selection is a selection of the parts image to become the basis of the display target, and differs from the actual display target upon enlargement/reduction according to the far and near of the viewpoint as described later.

Data of the parts image to become the basis is stored in a selected parts image data temporary storage unit 22.

The parts image selection unit 16 is connected to the parts image-viewpoint distance variation operation unit 18 and selected parts image significance value reading unit 24, and sends information for specifying the selected parts Image to this parts Image-viewpoint distance variation operation unit 18 and selected parts image significance value reading unit 24.

The parts image-viewpoint distance variation operation unit 18 is activated and operates the distance from the viewpoint of each of the selected parts images when the image generation necessity judgment unit 14 judges that the viewpoint change is only the enlargement/reduction of the size, or when the parts image selection unit 16 selects a new parts image.

Further, the selected parts image significance value reading unit 24 reads the significance value associated in advance with each of the selected parts images from the parts image-significance value comparison map memory 26.

This selected parts image significance value reading unit 24 reads the significance value targeting all parts images to become the basis upon receiving a signal from the parts image selection unit 16. In other words, when the direction of the object image 50 is changed, since the constituent parts images will differ, all parts images will be subject to reading.

Meanwhile, upon receiving only the enlargement/reduction signal of the object image 50 from the parts image-viewpoint distance variation operation unit 18, the selected parts image significance value reading unit 24 reads the significance value targeting the parts images that are non-display targets when enlargement is designated, and reads the significance value targeting parts Images that are display targets when reduction is designated.

The significance value read with the selected parts image significance value reading unit 24 is sent to a display target sorting unit 28 for sorting whether to make the parts image a display target based on the enlargement/reduction designation data from the parts image-viewpoint distance variation operation unit 18.

When a reduction designation is input in the display target sorting unit 28, judgment is made on whether to delete the parts Images that were display targets theretofore, Further, when an enlargement designation is input, judgment is made on whether to add the parts images (parts images read from the selected parts image data temporary storage unit 22) which were non-display targets theretofore.

The sorting results of this display target sorting unit 28 are sent to an object image editing unit 30.

The object image editing unit 30 generates an object when the initial state or viewpoint orientation is changed, deletes parts images during reduction, and adds parts images during enlargement, and the generated or edited object image data is stored in an object image data storage unit 32. The stored object image data is output to the bus arbiter 105 (c.f. FIG. 1) via a data output unit 34.

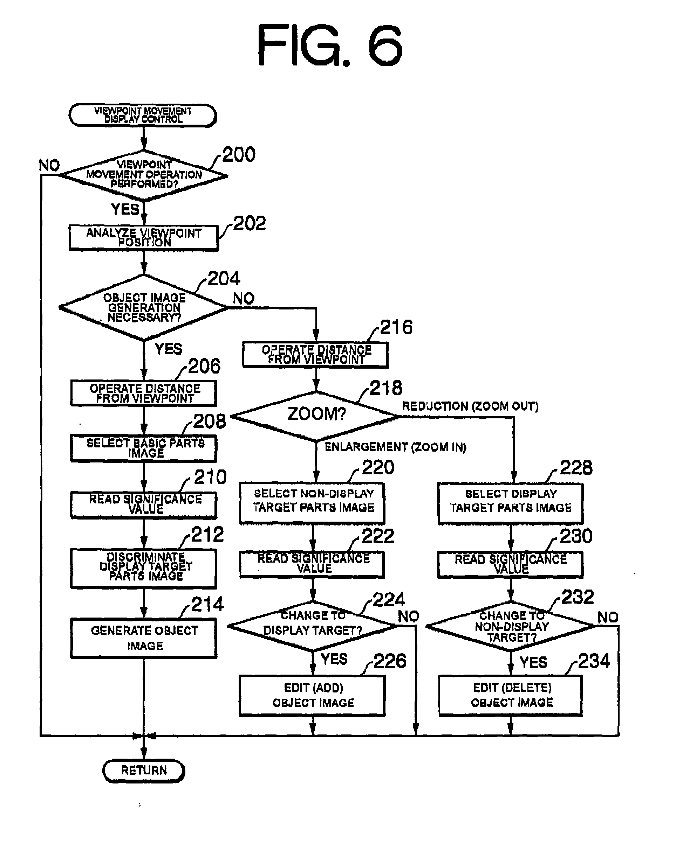

Operations of the present embodiment are now explained with reference to the flowchart shown in FIG. 6.

At step 200, whether a viewpoint movement operation has been made is judged, and, when the judgment is negative, this routine is ended since the viewpoint will not be moved.

Further, when the judgment is positive at step 200, the routine proceeds to step 202 for analyzing the viewpoint position, and proceeds to step 204 upon recognizing the viewpoint position.

At step 204, whether it is necessary to generate the object image 50 is judged. In other words, when displaying the object image 50 in the initial state, or changing the orientation of the object Image 50 being displayed, it is necessary to newly sort the parts images and generate the object image 50. Therefore, when the judgment is positive at step 204, foremost, the routine proceeds to step 206 for operating the distance from the viewpoint, and subsequently proceeds to step 208 for selecting the basic parts image according to the operated distance. In this selection, all parts images required in the most precise (enlarged) case will be selected.

At the subsequent step 210, the significance value of all selected parts images is read, the routine then proceeds to step 212 for sorting the parts images to become a display target and the parts images to be excluded from the display target according to the distance to the existing viewpoint, and then proceeds to step 214,

At step 214, the object image 50 is generated by combining the parts images made to be the display target, and this routine is ended thereby, Incidentally, the generated object image 50 is output to the bus arbiter 105 based on a separate control (routine) not shown, and displayed on the display monitor 110 via the rendering processor 106.

Further, when the judgment is negative at step 204: that is, when the object image 50 is already being displayed on the display monitor 110 and the change of the viewpoint position is either enlargement or reduction (coaxial movement), the routine proceeds to step 216 for operating the distance from the viewpoint, and then proceeds to step 218.

At step 218, the zoom direction (zoom in or zoom out) is determined. When it is judged as an enlargement (zoom in) at this step 218, the routine proceeds to step 220 for selecting a parts image not being currently displayed on the display monitor 110 (non-display target parts image), then proceeds to step 222 for reading the significance value of the non-display target parts image.

At the subsequent step 224, whether the parts image is to be changed into a display target based on the operated distance is judged, and when this judgment is positive, the routine proceeds to step 226 for editing the object image 50 (adding parts images), and this routine is ended thereby. Further, when the judgment is negative at step 224, It is judged that such change is not required, and this routine is ended thereby.

Further, when it is judged as a reduction (zoom out) at step 218, the routine proceeds to step 228 for selecting the parts image being currently displayed on the display monitor 110 (display target parts image), then proceeds to step 230 for reading the significance value of this display target parts image.

At the subsequent step 232, whether the parts image is to be changed Into a non-display target based on the operated distance is judged, and when the judgment is positive, the routine proceeds to step 234 for editing the object image 60 (deleting the parts image), and this routine is ended thereby. Further, when the judgment is negative at step 232, it is judged that such change is not required, and this routine Is ended thereby.

As described above, in the present embodiment, when an object image being displayed on a display monitor 110 is enlarged or reduced, parts images are added or deleted according to the order of significance value of the respective parts images set in advance based on the distance from the viewpoint thereof, Specifically, when an object image is to be enlarged, parts images with a low significance value and which are non-display targets in the current display status will be added. Meanwhile, when an object image is to be reduced, among the parts images currently being displayed, those with the lowest significance value are deleted, in order, to become non-display targets according to the distance from the viewpoint.

As a result, the so-called LOD technique of replacing a single parts image according to the display magnification thereof will no longer be necessary, and the workability for performing moving image processing and generating moving images in real time can be alleviated.

## Claims

1. An image processing device comprising a display unit capable of displaying an object image formed from a plurality of parts Images; and an image processing operation unit for controlling the image by processing said object image in real time;
wherein said operation processing unit has significance value storage means for storing the significance value numerically showing the level of relative importance and priority set in advance to the respective parts images configuring said object image;
operation means for operating the definition of said respective parts images to be displayed as a moving Image on said display unit; and
parts image display target discrimination means for discriminating whether to make the parts image a display target based on the definition operated with said operation means, and said significance value;
wherein each of said means is stored in a memory as an Image processing program and said image processing program is executed with said image processing operation unit.

2. An image processing device comprising a display unit capable of displaying an object image formed from a plurality of parts images; and an image processing operation unit for controlling a moving image by processing said object image in real time;
wherein said operation processing unit has significance value storage means for storing the significance value numerically showing the level of relative importance and priority set in advance to the respective parts images configuring said object image;
operation means for operating the distance of said respective parts images to be displayed as a moving image on said display unit from a viewpoint; and
parts image display control means for excluding, in order, the parts image with a low significance value from the display target to be displayed on said display unit in accordance with the distance operated with said operation means becoming longer, and making, in order, the parts image with a low significance value to be the display target to be displayed on said display unit in accordance with the distance operated with said operation means becoming shorter;
wherein each of said means is stored in a memory as an image processing program and said image processing program is executed with said image processing operation unit.

3. An image processing method to be executed with an image processing device comprising a display unit capable of displaying an object image formed from a plurality of parts images; and an image processing operation unit for controlling a moving image by processing said object image in real time;
wherein, based on an image processing program stored In a memory In advance, said image processing operation unit executes the steps of:
generating each of said parts images with one type of information content including the number of apexes and the texture size:
setting, to the respective parts images, the significance value numerically showing the level of relative importance and priority in the distance from a viewpoint which changes based on a moving image pattern; and
excluding the parts Image with a low significance value from the display target in accordance with the increase in the distance from said viewpoint to the respective parts images.

4. The image processing method according to claim 3, wherein said significance value is set in consideration of the relative display area occupied by said parts image.

5. A program for causing a computer to execute the respective steps in the image processing method according to Claim 3.

6. A program for causing a computer to function as an image generation means for generating an image of an object disposed in a virtual space viewed from a prescribed viewpoint position,
wherein said object is configured from a plurality of parts, display priority is set to the respective parts according to the distance from the viewpoint of said object, and said image generation means has means for operating the distance from said viewpoint of said object, and means for generating and object image by selecting the parts of an object to be displayed based on the operated distance and said display priority.

7. A recording medium having recorded thereon the program according to Claim 5.

8. A game apparatus configured so as to cause a computer to execute the program according to claim 8.

9. An image processing device for processing in real time image data representing a display image formed of a plurality of part images, wherein the device is arranged to store significance data which establishes the relative significance of said plurality of part images, to control the display definition of said part images as the display image moves, and to determine in accordance with said significance data whether any part images are to be excluded from the display image as the display image moves.
